(19) Europäisches Patentamt
European Patent Office
Office européen des brevets

(11) **EP 3 506 577 B1**

(12) **EUROPEAN PATENT SPECIFICATION**

(45) Date of publication and mention
of the grant of the patent:
**01.09.2021 Bulletin 2021/35**

(51) Int Cl.:
**H04L 25/02** *(2006.01)* **H04L 25/03** *(2006.01)*

(21) Application number: **17842613.6**

(22) Date of filing: **27.04.2017**

(86) International application number:
**PCT/CN2017/082156**

(87) International publication number:
**WO 2018/036188 (01.03.2018 Gazette 2018/09)**

(54) **METHOD AND APPARATUS FOR CALCULATING BLIND EQUALIZATION ERROR AND STORAGE MEDIUM**

VERFAHREN UND VORRICHTUNG ZUR BERECHNUNG VON BLINDENTZERRUNGSFEHLERN UND SPEICHERMEDIUM

PROCÉDÉ ET APPAREIL POUR CALCULER UNE ERREUR D'ÉGALISATION AVEUGLE ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2016 CN 201610737740**

(43) Date of publication of application:
**03.07.2019 Bulletin 2019/27**

(73) Proprietor: **Sanechips Technology Co., Ltd.
Shenzhen, Guangdong 518055 (CN)**

(72) Inventor: **PENG, Junfeng
Shenzhen
Guangdong 518055 (CN)**

(74) Representative: **Regimbeau
20, rue de Chazelles
75847 Paris Cedex 17 (FR)**

(56) References cited:
**CN-A- 101 022 433      CN-A- 101 854 317
US-A1- 2009 268 800**

- **LIU, FENG et al.: "Computationally Efficient Multi-modulus Blind Equalization Algorithms", Computer Engineering and Applications, vol. 43, no. 34, 31 December 2007 (2007-12-31), pages 150-152, XP009513739, ISSN: 1002-8331**
- **GUO, YECAI et al.: "Decision Circle Based Dual-Mode Constant Modulus Blind Equalization Algorithm", ICSP2006 Proceeding, 31 December 2006 (2006-12-31), XP031058939,**

**Description**

**CROSS-REFERENCE TO RELATED APPLICATIONS**

This application claims priority to Chinese patent application No. 201610737740.2 filed on 26 August 2016.

**TECHNICAL FIELD**

The present invention relates to communications and, in particular, to a method and apparatus for calculating a blind equalization error and a storage medium.

**BACKGROUND**

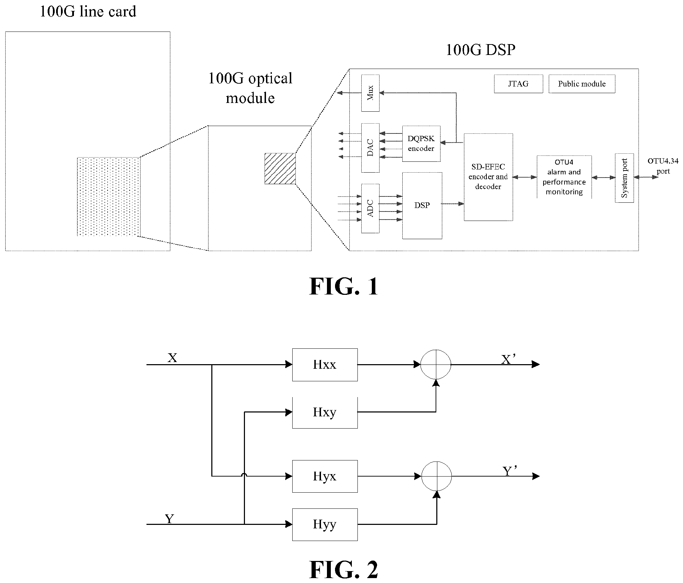

FIG.1 is an application scenario of a 100G DSP chip. As shown in FIG. 1, the 100G DSP chip is disposed in a 100G optical module in a 100G line card and is mainly used for digital signal processing. Before the digital signal processing, a received optical signal needs to be converted into a digital signal. However, due to irrational characteristics of a channel, a problem of polarization mode dispersion will appear in long-distance transmission of the optical signal. The problem is usually solved by means of the blind equalization technology, as an adaptive equalization technology which can equalize the channel only by using prior information of a receiving sequence and without a training sequence.

For the blind equalization technology, how to accurately calculate both error vectors before and after the equalization and adjust a blind equalization algorithm according to the error vectors is a key factor determining the technical performance of the blind equalization technology. In the existing art, the calculation of the error vector in the blind equalization technology mainly refers to calculation of the error vector by using various error calculation methods in parallel and determination of the final error vector according to the calculation results of the error calculation methods.

However, since this method requires multiple calculations, the method is complex and may cause the problem of occupation of a great amount of hardware resources and increase of power consumption.

Document CN10184317A provides a blind equalizer and a blind equalization processing method, which are suitable for the field of communications. The blind equalizer comprises a weight updating unit and a wave filter, wherein the weight updating unit comprises a first weight updating module, a second weight updating module and a weight merging module. In the blind equalizer and the blind equalization processing method, a weight vector is updated by making the error items of the first weight updating module minimum and making the logarithmic value of a local posterior probability density function adopted by the second weight updating module maximum, and a received signal vector is output after the received signal vector is subjected to the equalization processing according to the updated weight vector, so the blind equalizer which can increase velocity of convergence and improve steady-state performance is implemented.

**SUMMARY**

In view of this, embodiments of the present invention provide a method and apparatus for calculating a blind equalization error and a storage medium, to implement purposes of calculating the blind equalization error in a simple way, saving hardware resources and reducing power consumption.

The technical solutions of the present invention are implemented as follows.

A method for calculating a blind equalization error includes:

configuring a first error vector parameter group;

calculating a first error vector according to the first error vector parameter group;

calculating a first mean square error (MSE) maximum value and a first MSE mean value according to the first error vector;

determining whether an equalizer enters a single-mode steady-state converging state according to the first MSE maximum value and the first MSE mean value; and

if the equalizer enters the single-mode steady-state converging state, calculating a second error vector according to the first error vector parameter group.

As shown in the method described above, after calculating the second error vector according to the first error vector parameter group, the method further includes:

calculating a second MSE maximum value and a second MSE mean value according to the second error vector;

determining whether the equalizer exits the single-mode steady-state converging state according to the second MSE maximum value and the second MSE mean value;

if the equalizer exits the single-mode steady-state converging state, calculating a third error vector according to the first error vector parameter group;

calculating a third MSE maximum value and a third MSE mean value according to the third error vector; and

determining whether the equalizer enters the single-mode steady-state converging state according to the third MSE maximum value and the third MSE mean value.

As shown in the method described above, after calculating the second MSE maximum value and the second MSE mean value according to the second error vector, the method further includes:

determining whether the equalizer enters a multi-mode steady-state converging state according to the second MSE maximum value and the second MSE mean value;

if the equalizer enters the multi-mode steady-state converging state and a preset duration expires, configuring a second error vector parameter group;

calculating a fourth error vector according to the second error vector parameter group;

calculating a fourth MSE maximum value and a fourth MSE mean value according to the fourth error vector;

determining whether the equalizer exits the multi-mode steady-state converging state according to the fourth MSE maximum value and the fourth MSE mean value;

if the equalizer exits the multi-mode steady-state converging state, configuring the first error vector parameter group;

calculating a fifth error vector according to the first error vector parameter group;

calculating a fifth MSE maximum value and a fifth MSE mean value according to the fifth error vector; and

determining whether the equalizer enters the single-mode steady-state converging state according to the fifth MSE maximum value and the fifth MSE mean value.

As shown in the method described above, the first error vector, the second error vector, the third error vector, the fourth error vector and the fifth error vector each includes an error vector in X-polarized state and an error vector in Y-polarized state, the first MSE maximum value, the second MSE maximum value, the third MSE maximum value, the fourth MSE maximum value and the fifth MSE maximum value each includes an MSE maximum value in X-polarized state and an MSE maximum value in Y-polarized state, and the first MSE mean value, the second MSE mean value, the third MSE mean value, the fourth MSE mean value and the fifth MSE mean value each includes an MSE mean value in X-polarized state and an MSE mean value in Y-polarized state.

As shown in the method described above, the determining whether the equalizer enters a multi-mode steady-state converging state according to the second MSE maximum value and the second MSE mean value includes:

if a first MSE maximum value in X-polarized state and a first MSE maximum value in Y-polarized state both are less than a threshold 1, that a first MSE mean value in X-polarized state and a first MSE mean value in Y-polarized state both are less than a threshold 2, and that a 4S test is passed, the equalizer enters the single-mode steady-state converging state; otherwise, the equalizer does not enter the single-mode steady-state converging state.

The determining whether the equalizer exits the single-mode steady-state converging state according to the second MSE maximum value and the second MSE mean value includes:

if a second MSE maximum value in X-polarized state and a second MSE maximum value in Y-polarized state both are greater than a threshold 3, that a second MSE mean value in X-polarized state and a second MSE mean value in Y-polarized state both are greater than a threshold 4, and that the 4S test is passed, the equalizer exits the single-mode steady-state converging state; otherwise, the equalizer stays in the single-mode steady-state converging state.

The determining whether the equalizer enters a multi-mode steady-state converging state according to the second MSE maximum value and the second MSE mean value includes:

if the second MSE maximum value in X-polarized state and the second MSE maximum value in Y-polarized state both are less than a threshold 5, that the second MSE mean value in X-polarized state and the second MSE mean value in Y-polarized state both are less than a threshold 6, and that the 4S test is passed, the equalizer enters the multi-mode steady-state converging state; otherwise, the equalizer stays in the single-mode steady-state converging state.

The determining whether the equalizer exits the multi-mode steady-state converging state according to the fourth MSE maximum value and the fourth MSE mean value includes:

if a fourth MSE maximum value in X-polarized state and a fourth MSE maximum value in Y-polarized state both are greater than a threshold 7, that a fourth MSE mean value in X-polarized state and a fourth MSE mean value in Y-polarized state both are greater than a threshold 8, and that the 4S test is passed, the equalizer exits the multi-mode steady-state converging state; otherwise, the equalizer stays in the multi-mode steady-state converging state.

As shown in the method described above, the threshold 1, the threshold 2, the threshold 3, the threshold 4, the threshold 5, the threshold 6, the threshold 7 and the threshold 8 are obtained through a channel simulation experiment, and the threshold 5 < the threshold 7 < the threshold 1 < the threshold 3, and the threshold 6 < the threshold 8 < the threshold 2 < the threshold 4.

An apparatus for calculating a blind equalization error includes:

a configuration module, which is configured to configure a first error vector parameter group;

a calculation module, which is configured to calculate a first error vector according to the first error vector parameter group, calculate a first mean square error (MSE) maximum value and a first MSE mean value according to the first error vector, and calculate a second error vector according to the first error vector parameter group if an equalizer enters a single-mode steady-state converging state; and

a determination module, which is configured to determine whether the equalizer enters the single-mode steady-state converging state according to the first MSE maximum value and the first MSE mean value.

As shown in the apparatus described above, the calculation module is further configured to calculate a second MSE maximum value and a second MSE mean value according to the second error vector, calculate a third error vector according to the first error vector parameter group if the equalizer exits the single-mode steady-state converging state, and calculate a third MSE maximum value and a third MSE mean value according to the third error vector.

The determination module is further configured to determine whether the equalizer exits the single-mode steady-state converging state according to the second MSE maximum value and the second MSE mean value, and determine whether the equalizer enters the single-mode steady-state converging state according to the third MSE maximum value and the third MSE mean value.

As shown in the apparatus described above, the determination module is further configured to determine whether the equalizer enters a multi-mode steady-state converging state according to the second MSE maximum value and the second MSE mean value, determine whether the equalizer exits the multi-mode steady-state converging state according to a fourth MSE maximum value and a fourth MSE mean value, and determine whether the equalizer enters the single-mode steady-state converging state according to a fifth MSE maximum value and a fifth MSE mean value.

The configuration module is further configured to configure a second error vector parameter group if the equalizer enters the multi-mode steady-state converging state and a preset duration expires; and configure the first error vector parameter group if the equalizer exits the multi-mode steady-state converging state.

The calculation module is further configured to calculate a fourth error vector according to the second error vector parameter group, calculate the fourth MSE maximum value and the fourth MSE mean value according to the fourth error vector, calculate a fifth error vector according to the first error vector parameter group, and calculate the fifth MSE maximum value and the fifth MSE mean value according to the fifth error vector.

As shown in the method described above, the first error vector, the second error vector, the third error vector, the fourth error vector and the fifth error vector each includes an error vector in X-polarized state and an error vector in Y-polarized state, the first MSE maximum value, the second MSE maximum value, the third MSE maximum value, the fourth MSE maximum value and the fifth MSE maximum value each includes an MSE maximum value in X-polarized state and an MSE maximum value in Y-polarized state, and the first MSE mean value, the second MSE mean value, the third MSE mean value, the fourth MSE mean value and the fifth MSE mean value each includes an MSE mean value in X-polarized state and an MSE mean value in Y-polarized state.

As shown in the apparatus described above, the determination module is configured to:

determine whether a first MSE maximum value in X-polarized state and a first MSE maximum value in Y-polarized state both are less than a threshold 1, whether a first MSE mean value in X-polarized state and a first MSE mean value in Y-polarized state both are less than a threshold 2, and whether a 4S test is passed;

determine whether a second MSE maximum value in X-polarized state and a second MSE maximum value in Y-polarized state both are greater than a threshold 3, whether a second MSE mean value in X-polarized state and a second MSE mean value in Y-polarized state both are greater than a threshold 4, and whether the 4S test is passed;

determine whether the second MSE maximum value in X-polarized state and the second MSE maximum value in Y-polarized state both are less than a threshold 5, whether the second MSE mean value in X-polarized state and the second MSE mean value in Y-polarized state both are less than a threshold 6, and whether the 4S test is passed; and

determine whether a fourth MSE maximum value in X-polarized state and a fourth MSE maximum value in Y-polarized state both are greater than a threshold 7, whether a fourth MSE mean value in X-polarized state and a fourth MSE mean value in Y-polarized state both are greater than a threshold 8, and whether the 4S test is passed.

As shown in the apparatus described above, the threshold 1, the threshold 2, the threshold 3, the threshold 4, the threshold 5, the threshold 6, the threshold 7 and the threshold 8 are obtained through a channel simulation experiment, and the threshold 5 < the threshold 7 < the threshold 1 < the threshold 3, and the threshold 6 < the threshold 8 < the threshold 2 < the threshold 4.

The embodiments of the present invention provide a method and apparatus for calculating a blind equalization error and a storage medium. The method includes: configuring initial error vector parameter groups, calculating a blind equalization error vector, calculating a value of a mean square error (MSE) according to an error vector, determining a converging state of an equalizer according to the value of the MSE, determining whether to configure different error vector parameter groups for different converging states, and calculating a blind equalization error according to the determined error vector parameter groups, thereby implementing a purpose of dynamically calculating the blind equalization error in a simple way, saving hardware resources and reducing power consumption.

**BRIEF DESCRIPTION OF DRAWINGS**

FIG.1 is an application scenario of a 100G DSP chip;

FIG. 2 is a schematic diagram of input and output of a butterfly filter;

FIG. 3 is a flowchart of a method for calculating a blind equalization error according to an embodiment 1 of the present invention;

FIG. 4 is a flowchart of a method for calculating a blind equalization error according to an embodiment 2 of the present invention;

FIG. 5 is a schematic diagram of a process of a 4S test;

FIG. 6 is a flowchart of a method for calculating a blind equalization error according to an embodiment of the present invention; and

FIG. 7 is a structural diagram of an apparatus for calculating a blind equalization error according to an embodiment of the present invention.

## DETAILED DESCRIPTION

It is to be noted that there are many blind equalization algorithms where the constant modulus algorithm is the most widely used blind equalization algorithm in practical applications due to its small amount of calculations. The blind equalization constant modulus algorithm implements polarization de-multiplexing by using a butterfly filter, thereby making up for signal damage caused by the non-ideality of a channel. FIG. 2 is a schematic diagram of input and output of a butterfly filter. As shown in FIG. 2, a signal X and a signal Y are inputted. The signal X and the signal Y interfere with each other. The part of the signal X which is not interfered is $H_{xx}$, and the part of the signal Y which is not interfered is $H_{yy}$. The interference of the signal Y with the signal X causes $H_{xy}$, and the influence of the signal X on the signal Y causes $H_{yx}$. $H_{xx}$ and $H_{xy}$ are processed and a signal X' is outputted. $H_{yy}$ and $H_{yx}$ are processed and a signal Y' is outputted. The tap coefficients of the filter are adaptively updated in real time according to a calculated error vector using the following formulas:

$$
\begin{cases}
h_{xx}(n) = h_{xx}(n-1) + \sum_{0}^{len-1} \mu \cdot eps\_x(n-k) \cdot X_{out}(n-k) \cdot X_{in}^{*}(n-k) \\[2ex]
h_{xy}(n) = h_{xy}(n-1) + \sum_{0}^{len-1} \mu \cdot eps\_x(n-k) \cdot X_{out}(n-k) \cdot Y_{in}^{*}(n-k) \\[2ex]
h_{yx}(n) = h_{yx}(n-1) + \sum_{0}^{len-1} \mu \cdot eps\_y(n-k) \cdot Y_{out}(n-k) \cdot X_{in}^{*}(n-k) \\[2ex]
h_{yy}(n) = h_{yy}(n-1) + \sum_{0}^{len-1} \mu \cdot eps\_y(n-k) \cdot Y_{out}(n-k) \cdot Y_{in}^{*}(n-k)
\end{cases}
$$

The meaning of symbols in the formulas are explained with the formula for calculating a coefficient $h_{xx}(n)$ as an example. In this formula, $h_{xx}(n-1)$ is a coefficient calculated last time, $X_{in}^{*}$ is an input vector in X-polarized state, $X_{out}$ is a filtered output vector in X-polarized state, k is determined by hardware delay, $\mu$ is a configurable step factor, len is the amount of configurable data, and eps x is an error vector in X-polarized state.

The method for calculating a blind equalization error provided by embodiments of the present invention will be described below in detail with reference to the drawings. It is to be noted that there are two working modes of an equalizer, i.e., 100G and 200G. When the working mode of the equalizer is 200G, it is assumed that three modulus values of the blind equalization constant modulus algorithm are:

$$ qam16\_R = [R_1; R_2; R_3] , $$

and the corresponding weight of the three modulus values is:

$$ qam16\_w = [w_1; w_2; w_3] , $$

then,

$$ err\_x = qam16\_R - \left(X_{out}(n)\right)^2 $$

$$ err\_y = qam16\_R - \left(Y_{out}(n)\right)^2 $$

$$ind\_x = \min(abs(err\_x))$$

$$ind\_y = \min(abs(err\_y))$$

Therefore, the error vector eps x in X-polarized state and the error vector eps_y in Y-polarized state are:

$$eps\_x = err\_x(ind\_x) \cdot qam16\_w(ind\_x)_,$$

$$eps\_y = err\_y(ind\_y) \cdot qam16\_w(ind\_y)$$

The method for calculating both a real-time value max_mse_x and a mean value mean_mse_x (during mse_len) of a mean square error (MSE) in X-polarized state is:

$$mse\_x = (\sum_{0}^{len-1} abs(eps\_x))/len_,$$

$$max\_mse\_x = \max\left(mse\_x_{cnt}\right) \qquad (cnt = 1, 2, \ldots, mse\_len)_,$$

$$mean\_mse\_x = (\sum_{cnt=0}^{mse\_len-1} mse\_x_{cnt})/mse\_len.$$

The method for calculating both a real-time value max_mse_y and a mean value mean_mse_y (during mse_len) of an MSE in Y-polarized state is:

$$mse\_y = (\sum_{0}^{len-1} abs(eps\_y))/len_,$$

$$max\_mse\_y = \max\left(mse\_x_{cnt}\right) \qquad (cnt = 1, 2, \ldots, mse\_len)_,$$

$$mean\_mse\_y = (\sum_{cnt=0}^{mse\_len-1} mse\_y_{cnt})/mse\_len.$$

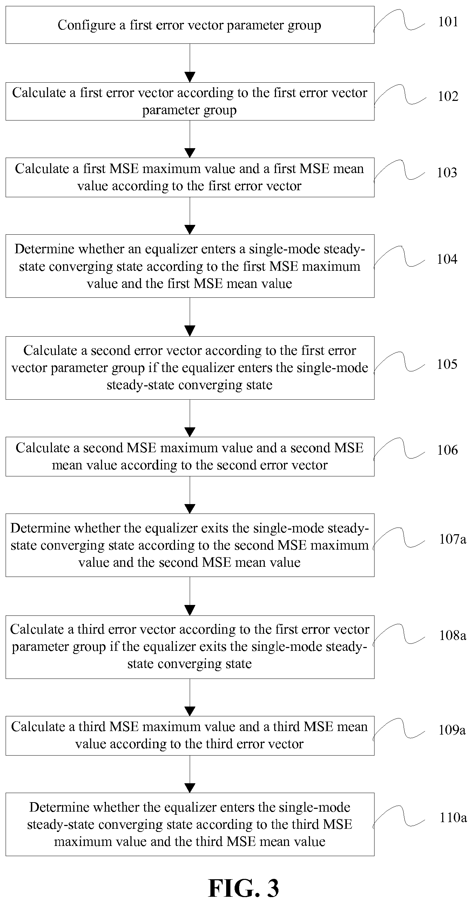

FIG. 3 is a flowchart of a method for calculating a blind equalization error according to an embodiment 1 of the present invention. As shown in FIG. 3, the method provided by the embodiment includes following steps.

In step 101, a first error vector parameter group is configured.

It is to be noted that the error vector parameter group has a format of para(R1, R2, R3, w1, w2, w3). When the working mode of the equalizer is 100G, the first error vector parameter group is para1($R_0\_v$, $R_0\_v$, $R_0\_v$, $w_0\_v$, $w_0\_v$, $w_0\_v$). When the working mode of the equalizer is 200G, the first error vector parameter group is para2($R\_v$, $R\_v$, $R\_v$, $w\_v$, $w\_v$, $w\_v$). The $R_0\_v$ and the $R\_v$ denote modulus values, which are calculated through the constant modulus algorithm. The $w_0\_v$ and the $w\_v$ denote the weights corresponding to respective modulus values, which are obtained through a channel simulation experiment.

In step 102, a first error vector is calculated according to the first error vector parameter group.

In step 103, a first MSE maximum value and a first MSE mean value are calculated according to the first error vector.

In step 104, whether an equalizer enters a single-mode steady-state converging state is determined according to the first MSE maximum value and the first MSE mean value.

In step 105, if the equalizer enters the single-mode steady-state converging state, a second error vector is calculated according to the first error vector parameter group.

It is to be noted that since the input vector and the output vector of the filter are constantly changing, the error vectors calculated at different times according to the same error vector parameter group are different.

Furthermore, after the step 105, the method further includes following steps.

In step 106, a second MSE maximum value and a second MSE mean value are calculated according to the second error vector.

In step 107a, whether the equalizer exits the single-mode steady-state converging state is determined according to the second MSE maximum value and the second MSE mean value.

In step 108a, if the equalizer exits the single-mode steady-state converging state, a third error vector is calculated according to the first error vector parameter group.

In step 109a, a third MSE maximum value and a third MSE mean value are calculated according to the third error vector.

In step 110a, whether the equalizer enters the single-mode steady-state converging state is determined according to the third MSE maximum value and the third MSE mean value.

It is to be noted that since the equalizer enters a multi-mode steady-state converging state only in the 200G working mode, which means that the equalizer does not enter the multi-mode steady-state converging state in the 100G working mode. Therefore, the method provided by this embodiment is a method for calculating a blind equalization error when the equalizer is in the 100G working mode, and a method for calculating a blind equalization error when the equalizer is in the 200G working mode but does not enter the multi-mode steady-state converging state.

The method for calculating a blind equalization error provided by the embodiment configures the first error vector parameter group, calculates the error vector, calculates the value of the MSE according to the error vector, determines whether the equalizer enters the single-mode steady-state converging state according to the value of the MSE, and calculates the error vector, thereby implementing a purpose of dynamically calculating the blind equalization error in a simple way, saving hardware resources and reducing power consumption.

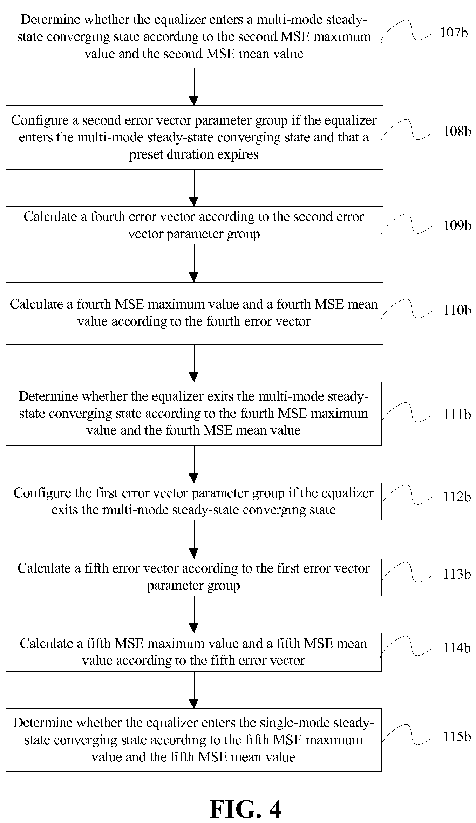

FIG. 4 is a flowchart of a method for calculating a blind equalization error according to an embodiment 2 of the present invention. As shown in FIG. 4, after the step 106, the method provided by the embodiment further includes following steps.

In step 107b, whether the equalizer enters a multi-mode steady-state converging state is determined according to the second MSE maximum value and the second MSE mean value.

In step 108b, if the equalizer enters the multi-mode steady-state converging state and a preset duration expires, a second error vector parameter group is configured.

It is to be noted that the format of the second error vector parameter group is para3($R_1\_v$, $R_2\_v$, $R_3\_v$, $w_1\_v$, $w_2\_v$, $w_3\_v$). The $R_1\_v$, the $R_2\_v$ and the $R_3\_v$ denote modulus values, which are calculated through the constant modulus algorithm. The $w_1\_v$, $w_2\_v$ and $w_3\_v$ denote the weights corresponding to respective modulus values, which are obtained through channel simulation experiment.

In step 109b, a fourth error vector is calculated according to the second error vector parameter group.

In step 110b, a fourth MSE maximum value and a fourth MSE mean value are calculated according to the fourth error vector.

In step 111b, whether the equalizer exits the multi-mode steady-state converging state is determined according to the fourth MSE maximum value and the fourth MSE mean value.

In step 112b, if the equalizer exits the multi-mode steady-state converging state, the first error vector parameter group is configured.

In step 113b, a fifth error vector is calculated according to the first error vector parameter group.

In step 114b, a fifth MSE maximum value and a fifth MSE mean value are calculated according to the fifth error vector.

In step 115b, whether the equalizer enters the single-mode steady-state converging state is determined according to the fifth MSE maximum value and the fifth MSE mean value.

It is to be noted that once the equalizer exits the multi-mode steady-state converging state, the equalizer cannot directly enter the multi-mode steady-state converging state and it needs to first determine whether to enter the single-mode steady-state converging state and then determine whether to enter the multi-mode steady-state converging state.

It is to be further noted that the method provided by this embodiment is a method for calculating a blind equalization error when the equalizer in the 200G working mode enters the multi-mode steady-state converging state.

Furthermore, the first error vector, the second error vector, the third error vector, the fourth error vector and the fifth error vector each includes an error vector in X-polarized state and an error vector in Y-polarized state, the first MSE maximum value, the second MSE maximum value, the third MSE maximum value, the fourth MSE maximum value and the fifth MSE maximum value each includes an MSE maximum value in X-polarized state and an MSE maximum value in Y-polarized state, and the first MSE mean value, the second MSE mean value, the third MSE mean value, the fourth MSE mean value and the fifth MSE mean value each includes an MSE mean value in X-polarized state and an MSE mean value in Y-polarized state.

The step in which whether an equalizer enters a single-mode steady-state converging state is determined according to the first MSE maximum value and the first MSE mean value specifically includes: if a first MSE maximum value in X-polarized state and a first MSE maximum value in Y-polarized state both are less than a threshold 1, that a first MSE mean value in X-polarized state and a first MSE mean value in Y-polarized state both are less than a threshold 2, and that a 4S test is passed, the equalizer enters the single-mode steady-state converging state; otherwise, the equalizer does not enter the single-mode steady-state converging state.

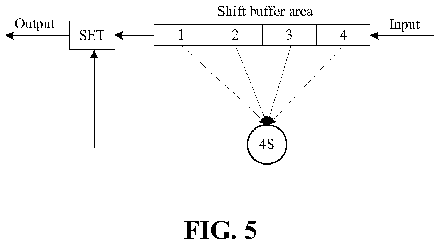

Specifically, FIG. 5 is a schematic diagram of a process of a 4S test. As shown in FIG. 5, when latest four states in a shift buffer area are the same, an SET field is set to be 1, which means that the 4S test is passed. It is assumed that the first MSE maximum value in X-polarized state and the first MSE maximum value in Y-polarized state are respectively max_mse_x1 and max_mse_y1, and the first MSE mean value in X-polarized state and the first MSE mean value in Y-polarized state are respectively mean_mse_x1 and mean_mse_y1. The case, in which the max_mse_x1 < the threshold 1 and the max_mse_y1 < the threshold 1 and the mean_mse_x1 < the threshold 2 and the mean_mse_y1 < the threshold 2, means that the equalizer enter the single-mode steady-state converging state, at this time, the 4S test is conducted. When all of the latest four states in the shift buffer area are the single-mode steady-state converging state, it is determined that the equalizer enters the single-mode steady-state converging state.

The step in which whether the equalizer exits the single-mode steady-state converging state is determined according to the second MSE maximum value and the second MSE mean value specifically includes: if a second MSE maximum value in X-polarized state and a second MSE maximum value in Y-polarized state both are greater than a threshold 3, that a second MSE mean value in X-polarized state and a second MSE mean value in Y-polarized state both are greater than a threshold 4, and that the 4S test is passed, the equalizer exits the single-mode steady-state converging state; otherwise, the equalizer stays in the single-mode steady-state converging state.

The step in which whether the equalizer enters a multi-mode steady-state converging state is determined according to the second MSE maximum value and the second MSE mean value specifically includes: if the second MSE maximum value in X-polarized state and the second MSE maximum value in Y-polarized state both are less than a threshold 5, that the second MSE mean value in X-polarized state and the second MSE mean value in Y-polarized state both are less than a threshold 6, and that the 4S test is passed, the equalizer exits the multi-mode steady-state converging state; otherwise, the equalizer stays in the single-mode steady-state converging state.

The step in which whether the equalizer exits the multi-mode steady-state converging state is determined according to the fourth MSE maximum value and the fourth MSE mean value specifically includes: if a fourth MSE maximum value in X-polarized state and a fourth MSE maximum value in Y-polarized state both are greater than a threshold 7, that a fourth MSE mean value in X-polarized state and a fourth MSE mean value in Y-polarized state both are greater than a threshold 8, and that the 4S test is passed, the equalizer exits the multi-mode steady-state converging state; otherwise, the equalizer stays in the multi-mode steady-state converging state. It is to be noted that the threshold 1, the threshold 2, the threshold 3, the threshold 4, the threshold 5, the threshold 6, the threshold 7 and the threshold 8 are obtained through the channel simulation experiment, and the threshold 5 < the threshold 7 < the threshold 1 < the threshold 3, and the threshold 6 < the threshold 8 < the threshold 2 < the threshold 4.

The method for calculating a blind equalization error provided by the embodiment configures the first error vector parameter group, calculates a blind equalization error vector, calculates the value of the MSE according to the error vector, determines the converging state of the equalizer according to the value of the MSE, configures the second error vector parameter group when it is determined that the equalizer enters the multi-mode steady-state converging state, and calculates the error according to the new configured second error vector parameter group, thereby implementing a purpose of dynamically calculating the blind equalization error in a simple way, saving hardware resources and reducing power consumption.

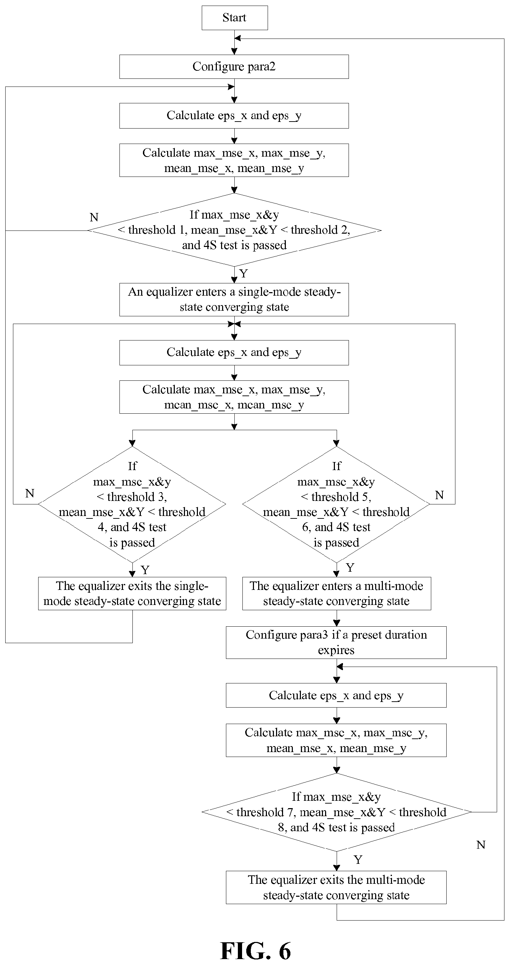

In an embodiment provided below, the calculation of the blind equalization error performed by the equalizer in the 200G working mode is described in detail. In the embodiment, it is assumed that the first error vector parameter group is para2, and the second error vector parameter group is para3; the error vector in X-polarized state is eps x, and the error vector in Y-polarized state is eps_y; the MSE maximum value in X-polarized state is max_mse_x, and the MSE maximum value in Y-polarized state is max_mse_y; and the MSE mean value in X-polarized state is mean_mse_x, and the MSE mean value in Y-polarized state is mean_mse_y. FIG. 6 is a flowchart of a method for calculating a blind equalization error according to an embodiment of the present invention. As shown in FIG. 6, the method provided by the embodiment includes following steps.

Initially, the equalizer is in a non-converging state. The first error vector parameter group para2 is configured, the first error vector eps_x1 in X-polarized state and the first error vector eps_y1 in Y-polarized state are calculated according to the first error vector parameter group para2, and both the first MSE maximum value max_mse_x1 and the first MSE mean value mean_mse_x1 in X-polarized state and both the first MSE maximum value max_mse_y1 and the first MSE mean value mean_mse_y1 in Y-polarized state are calculated respectively according to the eps_x1 and the eps_y1.

If it is determined that the max_mse_x1 < the threshold 1 and the max_mse_y1 < the threshold 1, that the mean_mse_x1 < the threshold 2 and the mean_mse_y1 < the threshold 2, and that the 4s test is passed, it is determined that the equalizer enters the single-mode steady-state converging state.

The second error vector eps_x2 in X-polarized state and the second error vector eps_y2 in Y-polarized state are calculated according to the first error vector parameter group para2, and both the second MSE maximum value max_mse_x2 and the second MSE mean value mean_mse_x2 in X-polarized state and both the second MSE maximum value max_mse_y2 and the second MSE mean value mean_mse_y2 in Y-polarized state are calculated respectively according to the eps_x2 and the eps_y2.

If it is determined that the max_mse_x2 > the threshold 3 and the max_mse_y2> the threshold 3, that the mean_mse_x2 > the threshold 4 and the mean_mse_y2 > the threshold 4, and that the 4s test is passed, it is determined that the equalizer exits the single-mode steady-state converging state.

Alternatively, if it is determined that the max_mse_x2 < the threshold 5 and the max_mse_y2 < the threshold 5, that the mean_mse_x2 < the threshold 6 and the mean_mse_y2 < the threshold 6, and that the 4s test is passed, it is determined that the equalizer enters the multi-mode steady-state converging state.

If the equalizer exits the single-mode steady-state converging state, the third error vector eps_x3 in X-polarized state and the third error vector eps_y3 in Y-polarized state are calculated according to the first error vector parameter group para2, both the third MSE maximum value max_mse_x3 and the third MSE mean value mean_mse_x3 in X-polarized state and both the third MSE maximum value max_mse_y3 and the third MSE mean value mean_mse_y3 in Y-polarized state are calculated respectively according to the eps_x3 and the eps_y3, and whether the equalizer enters the single-mode steady-state converging state again is determined.

If the equalizer enters the multi-mode steady-state converging state and the preset duration expires, the second error vector parameter group para3 is configured, the fourth error vector eps_x4 in X-polarized state and the fourth error vector eps_y4 in Y-polarized state are calculated according to the second error vector parameter group para3, and both the fourth MSE maximum value max_mse_x4 and the fourth MSE mean value mean_mse_x4 in X-polarized state and both the fourth MSE maximum value max_mse_y4 and the fourth MSE mean value mean_mse_y4 in Y-polarized state are calculated respectively according to the eps_x4 and the eps_y4.

If it is determined that the max_mse_x4 > the threshold 7 and the max_mse_y4 > the threshold 7, that the mean_mse_x4 > the threshold 8 and the mean_mse_y4 > the threshold 8, and that the 4s test is passed, it is determined that the equalizer exits the multi-mode steady-state converging state.

If the equalizer exits the multi-mode steady-state converging state, the first error vector parameter group para2 is configured, the fifth error vector eps_x5 in X-polarized state and the fifth error vector eps_y5 in Y-polarized state are calculated according to the first error vector parameter group para2, and both the fifth MSE maximum value max_mse_x5 and the fifth MSE mean value mean_mse_x5 in X-polarized state and both the fifth MSE maximum value max_mse_y5 and the fifth MSE mean value mean_mse_y5 in Y-polarized state are calculated respectively according to the eps_x5 and the eps_y5.

The method for calculating a blind equalization error provided by the embodiment configures the first error vector parameter group, calculates a blind equalization error vector, calculates the value of the MSE according to the error vector, determines the converging state of the equalizer according to the value of the MSE, configures the second error vector parameter group when it is determined that the equalizer enters the multi-mode steady-state converging state, and calculates the error according to the new configured second error vector parameter group, thereby implementing a purpose of dynamically calculating the blind equalization error in a simple way, saving hardware resources and reducing power consumption.

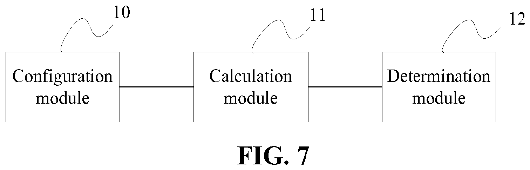

FIG. 7 is a structural diagram of an apparatus for calculating a blind equalization error according to an embodiment of the present invention. As shown in FIG. 7, the apparatus provided by the embodiment includes a configuration module 10, a calculation module 11 and a determination module 12.

The configuration module 10 is configured to configure a first error vector parameter group.

The calculation module 11 is configured to calculate a first error vector according to the first error vector parameter group, calculate a first MSE maximum value and a first MSE mean value according to the first error vector, and calculate a second error vector according to the first error vector parameter group if an equalizer enters a single-mode steady-state converging state.

The determination module 12 is configured to determine whether the equalizer enters the single-mode steady-state converging state according to the first MSE maximum value and the first MSE mean value.

Furthermore, the calculation module 11 is further configured to calculate a second MSE maximum value and a second MSE mean value according to the second error vector, calculate a third error vector according to the first error vector parameter group if the equalizer exits the single-mode steady-state converging state, and calculate a third MSE maximum value and a third MSE mean value according to the third error vector.

The determination module 12 is further configured to determine whether the equalizer exits the single-mode steady-state converging state according to the second MSE maximum value and the second MSE mean value, and determine whether the equalizer enters the single-mode steady-state converging state according to the third MSE maximum value and the third MSE mean value.

Furthermore, the determination module 12 is further configured to determine whether the equalizer enters a multi-mode steady-state converging state according to the second MSE maximum value and the second MSE mean value, determine whether the equalizer exits the multi-mode steady-state converging state according to a fourth MSE maximum value and a fourth MSE mean value, and determine whether the equalizer enters the single-mode steady-state converging state according to a fifth MSE maximum value and a fifth MSE mean value.

The configuration module 10 is further configured to configure a second error vector parameter group if the equalizer enters the multi-mode steady-state converging state and a preset duration expires; and configure the first error vector parameter group if the equalizer exits the multi-mode steady-state converging state.

The calculation module 11 is further configured to calculate a fourth error vector according to the second error vector parameter group, calculate the fourth MSE maximum value and the fourth MSE mean value according to the fourth error vector, calculate a fifth error vector according to the first error vector parameter group, and calculate the fifth MSE maximum value and the fifth MSE mean value according to the fifth error vector.

It is to be noted that the determination module is specifically configured to:

determine whether a first MSE maximum value in X-polarized state and a first MSE maximum value in Y-polarized state both are less than a threshold 1, whether a first MSE mean value in X-polarized state and a first MSE mean value in Y-polarized state both are less than a threshold 2, and whether a 4S test is passed;

determine whether a second MSE maximum value in X-polarized state and a second MSE maximum value in Y-polarized state both are greater than a threshold 3, whether a second MSE mean value in X-polarized state and a second MSE mean value in Y-polarized state both are greater than a threshold 4, and whether the 4S test is passed;

determine whether the second MSE maximum value in X-polarized state and the second MSE maximum value in Y-polarized state both are less than a threshold 5, whether the second MSE mean value in X-polarized state and the second MSE mean value in Y-polarized state both are less than a threshold 6, and whether the 4S test is passed; and

determine whether a fourth MSE maximum value in X-polarized state and a fourth MSE maximum value in Y-polarized state both are greater than a threshold 7, whether a fourth MSE mean value in X-polarized state and a fourth MSE mean value in Y-polarized state both are greater than a threshold 8, and whether the 4S test is passed.

The threshold 1, the threshold 2, the threshold 3, the threshold 4, the threshold 5, the threshold 6, the threshold 7 and the threshold 8 are obtained through a channel simulation experiment, and the threshold 5 < the threshold 7 < the threshold 1 < the threshold 3, and the threshold 6 < the threshold 8 < the threshold 2 < the threshold 4.

Furthermore, the first error vector, the second error vector, the third error vector, the fourth error vector and the fifth error vector each includes an error vector in X-polarized state and an error vector in Y-polarized state, the first MSE maximum value, the second MSE maximum value, the third MSE maximum value, the fourth MSE maximum value and the fifth MSE maximum value each includes an MSE maximum value in X-polarized state and an MSE maximum value in Y-polarized state, and the first MSE mean value, the second MSE mean value, the third MSE mean value, the fourth MSE mean value and the fifth MSE mean value each includes an MSE mean value in X-polarized state and an MSE mean value in Y-polarized state.

The apparatus for calculating a blind equalization error provided by the embodiments of the present invention may be used for executing the technical solutions in the above-mentioned embodiments. The implementation principle and technical effects are similar and thus will not be repeated here again.

In practical applications, the configuration module 10, the calculation module 11 and the determination module 12 may all be implemented by a central processing unit (CPU), a micro processor unit (MPU), a digital signal processor (DSP), or a field programmable gate array (FPGA) located in the apparatus for calculating a blind equalization error.

In the embodiments of the present invention, the methods for calculating a blind equalization error, if implemented in the form of software function modules and sold or used as independent products, may also be stored in a computer-readable storage medium. Based on this understanding, the technical solutions provided by the embodiments of the present invention substantially, or the part contributing to the existing art, may be embodied in the form of a software product. The computer software product is stored in a storage medium and includes several instructions for enabling a computer device (which may be a personal computer, a server or a network device) to execute all or part of the methods provided by the embodiments of the present invention. The foregoing storage medium may be a USB flash disk, a mobile hard disk, a read only memory (ROM), a magnetic disk, an optical disk or another medium capable of storing program codes. In this way, the embodiments of the present invention are not limited to any specific combination of hardware and software.

Correspondingly, an embodiment of the present invention further provides a computer-readable storage medium. The computer-readable storage medium is configured to store a computer program for executing the above method for calculating a blind equalization error provided by the present invention.

It should be understood by those skilled in the art that the embodiments of the present invention can provide a method, a system or a computer program product. Therefore, the present invention may adopt a mode of a hardware embodiment, a software embodiment or a combination of hardware and software embodiments. In addition, the present invention may adopt a form of a computer program product implemented on one or more computer-usable storage media (which include, but are not limited to, a disk memory, an optical memory and the like) which include computer-usable program codes.

The present invention is described with reference to flowcharts and/or block diagrams of methods, devices (systems) and computer program products according to the embodiments of the present invention. It is to be understood that the computer program instructions can be used to implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or the processor of another programmable data processing device produce an apparatus for implementing functions designated in one or more flows in the flowcharts and/or one or more blocks in the block diagrams.

These computer program instructions may also be stored in a computer-readable memory which can direct a computer or another programmable data processing device to operate in a particular manner so that the instructions stored in the computer-readable memory produce a manufactured product including an instructing apparatus. The instructing apparatus implements the functions designated in the one or more flows in the flowcharts and/or the one or more blocks in the block diagrams.

These computer program instructions may also be loaded onto the computer or another programmable data processing device so that a series of operations and steps are performed on the computer or another programmable device to produce processing implemented by the computer. Therefore, instructions executed on the computer or another programmable device provide steps for implementing the functions designated in the one or more flows in the flowcharts and/or the one or more blocks in the block diagrams.

## INDUSTRIAL APPLICABILITY

The method for calculating a blind equalization error provided by the embodiments of the present invention configures a first error vector parameter group, calculates a first error vector according to the first error vector parameter group, calculates a first MSE maximum value and a first MSE mean value according to the first error vector, determines whether an equalizer enters a single-mode steady-state converging state according to the first MSE maximum value and the first MSE mean value, and calculates a second error vector according to the first error vector parameter group if the equalizer enters the single-mode steady-state converging state. Through the above technical solution, a purpose of dynamically calculating the blind equalization error in a simple way may be implemented, hardware resources may be saved and power consumption may be reduced.

## Claims

1.  A method for calculating a blind equalization error, **characterized by** comprising:

      configuring (101) a first error vector parameter group;
      calculating (102) a first error vector according to the first error vector parameter group;
      calculating (103) a first mean square error, MSE, maximum value and a first MSE mean value according to the first error vector;
      determining (104) whether an equalizer enters a single-mode steady-state converging state according to the first MSE maximum value and the first MSE mean value; and
      in response to determining that the equalizer enters the single-mode steady-state converging state, calculating (105) a second error vector according to the first error vector parameter group.

2. The method of claim 1, wherein after calculating (105) the second error vector according to the first error vector parameter group, the method further comprises:

calculating (106) a second MSE maximum value and a second MSE mean value according to the second error vector;

determining (107a) whether the equalizer exits the single-mode steady-state converging state according to the second MSE maximum value and the second MSE mean value;

in response to determining that the equalizer exits the single-mode steady-state converging state, calculating (108a) a third error vector according to the first error vector parameter group;

calculating (109a) a third MSE maximum value and a third MSE mean value according to the third error vector; and

determining (110a) whether the equalizer enters the single-mode steady-state converging state according to the third MSE maximum value and the third MSE mean value.

3. The method of claim 2, wherein after calculating (106) the second MSE maximum value and the second MSE mean value according to the second error vector, the method further comprises:

determining (107b) whether the equalizer enters a multi-mode steady-state converging state according to the second MSE maximum value and the second MSE mean value;

in response to determining that the equalizer enters the multi-mode steady-state converging state and that a preset duration expires, configuring (108b) a second error vector parameter group;

calculating (109b) a fourth error vector according to the second error vector parameter group;

calculating (110b) a fourth MSE maximum value and a fourth MSE mean value according to the fourth error vector;

determining (111b) whether the equalizer exits the multi-mode steady-state converging state according to the fourth MSE maximum value and the fourth MSE mean value;

in response to determining that the equalizer exits the multi-mode steady-state converging state, configuring (112b) the first error vector parameter group;

calculating (113b) a fifth error vector according to the first error vector parameter group;

calculating (114b) a fifth MSE maximum value and a fifth MSE mean value according to the fifth error vector; and

determining (115b) whether the equalizer enters the single-mode steady-state converging state according to the fifth MSE maximum value and the fifth MSE mean value.

4. The method of claim 3, wherein the first error vector, the second error vector, the third error vector, the fourth error vector and the fifth error vector each comprises an error vector in X-polarized state and an error vector in Y-polarized state,

the first MSE maximum value, the second MSE maximum value, the third MSE maximum value, the fourth MSE maximum value and the fifth MSE maximum value each comprises an MSE maximum value in X-polarized state and an MSE maximum value in Y-polarized state, and

the first MSE mean value, the second MSE mean value, the third MSE mean value, the fourth MSE mean value and the fifth MSE mean value each comprises an MSE mean value in X-polarized state and an MSE mean value in Y-polarized state.

5. The method of claim 4, wherein the determining whether an equalizer enters a single-mode steady-state converging state according to the first MSE maximum value and the first MSE mean value comprises:

in response to determining that a first MSE maximum value in X-polarized state and a first MSE maximum value in Y-polarized state both are less than a threshold 1, that a first MSE mean value in X-polarized state and a first MSE mean value in Y-polarized state both are less than a threshold 2, and that a 4S test is passed, the equalizer enters the single-mode steady-state converging state; otherwise, the equalizer does not enter the single-mode steady-state converging state;

wherein the determining whether the equalizer exits the single-mode steady-state converging state according to the second MSE maximum value and the second MSE mean value comprises:

in response to determining that a second MSE maximum value in X-polarized state and a second MSE maximum value in Y-polarized state both are greater than a threshold 3, that a second MSE mean value in X-polarized state and a second MSE mean value in Y-polarized state both are greater than a threshold 4, and that the 4S test is passed, the equalizer exits the single-mode steady-state converging state; otherwise, the equalizer stays in the single-mode steady-state converging state;

wherein the determining whether the equalizer enters a multi-mode steady-state converging state according to the second MSE maximum value and the second MSE mean value comprises:

in response to determining that the second MSE maximum value in X-polarized state and the second MSE maximum value in Y-polarized state both are less than a threshold 5, that the second MSE mean value in X-polarized state and the second MSE mean value in Y-polarized state both are less than a threshold 6, and that the 4S test is passed, the equalizer enters the multi-mode steady-state converging state; otherwise, the equalizer stays in the single-mode steady-state converging state; and

wherein the determining whether the equalizer exits the multi-mode steady-state converging state according to the fourth MSE maximum value and the fourth MSE mean value comprises:

in response to determining that a fourth MSE maximum value in X-polarized state and a fourth MSE maximum value in Y-polarized state both are greater than a threshold 7, that a fourth MSE mean value in X-polarized state and a fourth MSE mean value in Y-polarized state both are greater than a threshold 8, and that the 4S test is passed, the equalizer exits the multi-mode steady-state converging state; otherwise, the equalizer stays in the multi-mode steady-state converging state.

6. The method of claim 5, wherein the threshold 1, the threshold 2, the threshold 3, the threshold 4, the threshold 5, the threshold 6, the threshold 7 and the threshold 8 are obtained through a channel simulation experiment, and the threshold 5 < the threshold 7 < the threshold 1 < the threshold 3, and the threshold 6 < the threshold 8 < the threshold 2 < the threshold 4.

7. An apparatus for calculating a blind equalization error, **characterized by** comprising:

a configuration module (10), which is configured to configure a first error vector parameter group;
a calculation module (11), which is configured to:

calculate a first error vector according to the first error vector parameter group,
calculate a first mean square error, MSE, maximum value and a first MSE mean value according to the first error vector, and
calculate a second error vector according to the first error vector parameter group in response to determining that an equalizer enters a single-mode steady-state converging state; and

a determination module (12), which is configured to determine whether the equalizer enters the single-mode steady-state converging state according to the first MSE maximum value and the first MSE mean value.

8. The apparatus of claim 7, wherein
the calculation module (10) is further configured to:

calculate a second MSE maximum value and a second MSE mean value according to the second error vector,
calculate a third error vector according to the first error vector parameter group in response to determining that the equalizer exits the single-mode steady-state converging state, and
calculate a third MSE maximum value and a third MSE mean value according to the third error vector; and

the determination module (12) is further configured to:

determine whether the equalizer exits the single-mode steady-state converging state according to the second MSE maximum value and the second MSE mean value, and
determine whether the equalizer enters the single-mode steady-state converging state according to the third MSE maximum value and the third MSE mean value.

9. The apparatus of claim 8, wherein
the determination module (12) is further configured to:

determine whether the equalizer enters a multi-mode steady-state converging state according to the second MSE maximum value and the second MSE mean value,
determine whether the equalizer exits the multi-mode steady-state converging state according to a fourth MSE maximum value and a fourth MSE mean value, and
determine whether the equalizer enters the single-mode steady-state converging state according to a fifth MSE maximum value and a fifth MSE mean value;

the configuration module (12) is further configured to:

configure a second error vector parameter group in response to determining that the equalizer enters the multi-mode steady-state converging state and that a preset duration expires, and
configure the first error vector parameter group in response to determining that the equalizer exits the multi-mode steady-state converging state; and

the calculation module (11) is further configured to:

calculate a fourth error vector according to the second error vector parameter group,
calculate the fourth MSE maximum value and the fourth MSE mean value according to the fourth error vector,
calculate a fifth error vector according to the first error vector parameter group, and
calculate the fifth MSE maximum value and the fifth MSE mean value according to the fifth error vector.

10. The apparatus of claim 9, wherein the first error vector, the second error vector, the third error vector, the fourth error vector and the fifth error vector each comprises an error vector in X-polarized state and an error vector in Y-polarized state,
the first MSE maximum value, the second MSE maximum value, the third MSE maximum value, the fourth MSE maximum value and the fifth MSE maximum value each comprises an MSE maximum value in X-polarized state and an MSE maximum value in Y-polarized state, and
the first MSE mean value, the second MSE mean value, the third MSE mean value, the fourth MSE mean value and the fifth MSE mean value each comprises an MSE mean value in X-polarized state and an MSE mean value in Y-polarized state.

11. The apparatus of claim 10, wherein the determination module (12) is configured to:

determine whether a first MSE maximum value in X-polarized state and a first MSE maximum value in Y-polarized state both are less than a threshold 1, whether a first MSE mean value in X-polarized state and a first MSE mean value in Y-polarized state both are less than a threshold 2, and whether a 4S test is passed;
determine whether a second MSE maximum value in X-polarized state and a second MSE maximum value in Y-polarized state both are greater than a threshold 3, whether a second MSE mean value in X-polarized state and a second MSE mean value in Y-polarized state both are greater than a threshold 4, and whether the 4S test is passed;
determine whether the second MSE maximum value in X-polarized state and the second MSE maximum value in Y-polarized state both are less than a threshold 5, whether the second MSE mean value in X-polarized state and the second MSE mean value in Y-polarized state both are less than a threshold 6, and whether the 4S test is passed; and
determine whether a fourth MSE maximum value in X-polarized state and a fourth MSE maximum value in Y-polarized state both are greater than a threshold 7, whether a fourth MSE mean value in X-polarized state and a fourth MSE mean value in Y-polarized state both are greater than a threshold 8, and whether the 4S test is passed.

12. The apparatus of claim 11, wherein the threshold 1, the threshold 2, the threshold 3, the threshold 4, the threshold 5, the threshold 6, the threshold 7 and the threshold 8 are obtained through a channel simulation experiment, and the threshold 5 < the threshold 7 < the threshold 1 < the threshold 3, and the threshold 6 < the threshold 8 < the threshold 2 < the threshold 4.

13. A computer storage medium, **characterized in that** the computer storage medium is configured to store computer-executable instructions for executing the method for calculating a blind equalization error of any one of claims 1 to 6.

**Patentansprüche**

1. Verfahren zum Berechnen eines Blindentzerrungsfehlers, das **dadurch gekennzeichnet ist, dass** es Folgendes umfasst:

Auslegen (101) einer ersten Fehlervektorparametergruppe;
Berechnen (102) eines ersten Fehlervektors gemäß der ersten Fehlervektorparametergruppe;
Berechnen (103) eines ersten Höchstwertes eines mittleren quadratischen Fehlers, MSE, und eines ersten MSE-Mittelwertes gemäß dem ersten Fehlervektor;

Bestimmen (104) gemäß dem ersten MSE-Höchstwert und dem ersten MSE-Mittelwert, ob ein Entzerrer in einen Monomode-Gleichgewichtskonvergenzzustand eintritt; und

in Reaktion auf das Bestimmen, dass der Entzerrer in den Monomode-Gleichgewichtskonvergenzzustand eintritt, Berechnen (105) eines zweiten Fehlervektors gemäß der ersten Fehlervektorparametergruppe.

2. Verfahren nach Anspruch 1, wobei das Verfahren nach dem Berechnen (105) des zweiten Fehlervektors gemäß der ersten Fehlervektorparametergruppe Folgendes umfasst:

Berechnen (106) eines zweiten MSE-Höchstwertes und eines zweiten MSE-Mittelwertes gemäß dem zweiten Fehlervektor;

Bestimmen (107a) gemäß dem zweiten MSE-Höchstwert und dem zweiten MSE-Mittelwert, ob der Entzerrer den Monomode-Gleichgewichtskonvergenzzustand verlässt;

in Reaktion auf das Bestimmen, dass der Entzerrer den Monomode-Gleichgewichtskonvergenzzustand verlässt, Berechnen (108a) eines dritten Fehlervektors gemäß der ersten Fehlervektorparametergruppe;

Berechnen (109a) eines dritten MSE-Höchstwertes und eines dritten MSE-Mittelwertes gemäß dem dritten Fehlervektor und

Bestimmen (110a) gemäß dem dritten MSE-Höchstwert und dem dritten MSE-Mittelwert, ob der Entzerrer in den Monomode-Gleichgewichtskonvergenzzustand eintritt.

3. Verfahren nach Anspruch 2, wobei das Verfahren nach dem Berechnen (106) des zweiten MSE-Höchstwertes und des zweiten MSE-Mittelwertes gemäß dem zweiten Fehlervektor ferner Folgendes umfasst:

Bestimmen (107b) gemäß dem zweiten MSE-Höchstwert und dem zweiten MSE-Mittelwert, ob der Entzerrer in einen Multimode-Gleichgewichtskonvergenzzustand eintritt;

in Reaktion auf das Bestimmen, dass der Entzerrer in den Multimode-Gleichgewichtskonvergenzzustand eintritt und dass eine voreingestellte Dauer abläuft, Auslegen (108b) einer zweiten Fehlervektorparametergruppe;

Berechnen (109b) eines vierten Fehlervektors gemäß der zweiten Fehlervektorparametergruppe;

Berechnen (110b) eines vierten MSE-Höchstwertes und eines vierten MSE-Mittelwertes gemäß dem vierten Fehlervektor;

Bestimmen (111b) gemäß dem vierten MSE-Höchstwert und dem vierten MSE-Mittelwert, ob der Entzerrer den Multimode-Gleichgewichtskonvergenzzustand verlässt;

in Reaktion auf das Bestimmen, dass der Entzerrer den Multimode-Gleichgewichtskonvergenzzustand verlässt, Auslegen (112b) der ersten Fehlervektorparametergruppe;

Berechnen (113b) eines fünften Fehlervektors gemäß der ersten Fehlervektorparametergruppe;

Berechnen (114b) eines fünften MSE-Höchstwertes und eines fünften MSE-Mittelwertes gemäß dem fünften Fehlervektor und

Bestimmen (115b) gemäß dem fünften MSE-Höchstwert und dem fünften MSE-Mittelwert, ob der Entzerrer in den Monomode-Gleichgewichtskonvergenzzustand eintritt.

4. Verfahren nach Anspruch 3, wobei der erste Fehlervektor, der zweite Fehlervektor, der dritte Fehlervektor, der vierte Fehlervektor und der fünfte Fehlervektor jeweils einen Fehlervektor in einem X-polarisierten Zustand und einen Fehlervektor in einem Y-polarisierten Zustand umfassen,

der erste MSE-Höchstwert, der zweite MSE-Höchstwert, der dritte MSE-Höchstwert, der vierte MSE-Höchstwert und der fünfte MSE-Höchstwert umfassen jeweils einen MSE-Höchstwert in einem X-polarisierten Zustand und einen MSE-Höchstwert in einem Y-polarisierten Zustand und

der erste MSE-Mittelwert, der zweite MSE-Mittelwert, der dritte MSE-Mittelwert, der vierte MSE-Mittelwert und der fünfte MSE-Mittelwert umfassen jeweils einen MSE-Mittelwert in einem X-polarisierten Zustand und einen MSE-Mittelwert in einem Y-polarisierten Zustand.

5. Verfahren nach Anspruch 4, wobei das Bestimmen gemäß dem ersten MSE-Höchstwert und dem ersten MSE-Mittelwert, ob ein Entzerrer in einen Monomode-Gleichgewichtskonvergenzzustand eintritt, Folgendes umfasst:

in Reaktion auf das Bestimmen, dass ein erster MSE-Höchstwert in einem X-polarisierten Zustand und ein erster MSE-Höchstwert in einem Y-polarisierten Zustand beide kleiner sind als ein Schwellwert 1, dass ein erster MSE-Mittelwert in einem X-polarisierten Zustand und ein erster MSE-Mittelwert in einem Y-polarisierten Zustand beide kleiner sind als ein Schwellwert 2 und dass ein 4S-Test bestanden ist, Eintreten in den Monomode-Gleichgewichtskonvergenzzustand durch den Entzerrer; andernfalls kein Eintreten in den Monomode-Gleichgewichtskonvergenzzustand durch den Entzerrer;

wobei das Bestimmen gemäß dem zweiten MSE-Höchstwert und dem zweiten MSE-Mittelwert, ob der Entzerrer den Monomode-Gleichgewichtskonvergenzzustand verlässt, Folgendes umfasst:

in Reaktion auf das Bestimmen, dass ein zweiter MSE-Höchstwert in einem X-polarisierten Zustand und ein zweiter MSE-Höchstwert in einem Y-polarisierten Zustand beide größer sind als ein Schwellwert 3, dass ein zweiter MSE-Mittelwert in einem X-polarisierten Zustand und ein zweiter MSE-Mittelwert in einem Y-polarisierten Zustand beide größer sind als ein Schwellwert 4 und dass der 4S-Test bestanden ist, Verlassen des Monomode-Gleichgewichtskonvergenzzustands durch den Entzerrer; andernfalls Verbleiben im Monomode-Gleichgewichtskonvergenzzustand durch den Entzerrer;

wobei das Bestimmen gemäß dem zweiten MSE-Höchstwert und dem zweiten MSE-Mittelwert, ob der Entzerrer in einen Multimode-Gleichgewichtskonvergenzzustand eintritt, Folgendes umfasst:

in Reaktion auf das Bestimmen, dass der zweite MSE-Höchstwert in einem X-polarisierten Zustand und der zweite MSE-Höchstwert in einem Y-polarisierten Zustand beide kleiner sind als ein Schwellwert 5, dass der zweite MSE-Mittelwert in einem X-polarisierten Zustand und der zweite MSE-Mittelwert in einem Y-polarisierten Zustand beide kleiner sind als ein Schwellwert 6 und dass der 4S-Test bestanden ist, Eintreten in den Multimode-Gleichgewichtskonvergenzzustand durch den Entzerrer; andernfalls Verbleiben im Monomode-Gleichgewichtskonvergenzzustand durch den Entzerrer; und

wobei das Bestimmen gemäß dem vierten MSE-Höchstwert und dem vierten MSE-Mittelwert, ob der Entzerrer den Multimode-Gleichgewichtskonvergenzzustand verlässt, Folgendes umfasst:

in Reaktion auf das Bestimmen, dass ein vierter MSE-Höchstwert in einem X-polarisierten Zustand und ein vierter MSE-Höchstwert in einem Y-polarisierten Zustand beide größer sind als ein Schwellwert 7, dass ein vierter MSE-Mittelwert in einem X-polarisierten Zustand und ein vierter MSE-Mittelwert in einem Y-polarisierten Zustand beide größer sind als ein Schwellwert 8 und dass der 4S-Test bestanden ist, Verlassen des Multimode-Gleichgewichtskonvergenzzustands durch den Entzerrer; andernfalls Verbleiben im Multimode-Gleichgewichtskonvergenzzustand durch den Entzerrer.

6. Verfahren nach Anspruch 5, wobei der Schwellwert 1, der Schwellwert 2, der Schwellwert 3, der Schwellwert 4, der Schwellwert 5, der Schwellwert 6, der Schwellwert 7 und der Schwellwert 8 durch ein Kanalsimulationsexperiment erhalten werden und der Schwellwert 5 < der Schwellwert 7 < der Schwellwert 1 < der Schwellwert 3 und der Schwellwert 6 < der Schwellwert 8 < der Schwellwert 2 < der Schwellwert 4.

7. Vorrichtung zum Berechnen eines Blindentzerrungsfehlers, die **dadurch gekennzeichnet ist, dass** sie Folgendes umfasst:

ein Auslegungsmodul (10), das dazu ausgelegt ist, eine erste Fehlervektorparametergruppe auszulegen;
ein Berechnungsmodul (11), das zu Folgendem ausgelegt ist:

Berechnen eines ersten Fehlervektors gemäß der ersten Fehlervektorparametergruppe,
Berechnen eines ersten Höchstwertes eines mittleren quadratischen Fehlers, MSE, und eines ersten MSE-Mittelwertes gemäß dem ersten Fehlervektor und
Berechnen eines zweiten Fehlervektors gemäß der ersten Fehlervektorparametergruppe in Reaktion auf das Bestimmen, dass der Entzerrer in den Monomode-Gleichgewichtskonvergenzzustand eintritt; und
ein Bestimmungsmodul (12), das dazu ausgelegt ist gemäß dem ersten MSE-Höchstwert und dem ersten MSE-Mittelwert zu bestimmen, ob der Entzerrer in den Monomode-Gleichgewichtskonvergenzzustand eintritt.

8. Vorrichtung nach Anspruch 7, wobei
das Berechnungsmodul (10) ferner zu Folgendem ausgelegt ist:

Berechnen eines zweiten MSE-Höchstwertes und eines zweiten MSE-Mittelwertes gemäß dem zweiten Fehlervektor,
Berechnen eines dritten Fehlervektors gemäß der ersten Fehlervektorparametergruppe in Reaktion auf das Bestimmen, dass der Entzerrer den Monomode-Gleichgewichtskonvergenzzustand verlässt, und
Berechnen eines dritten MSE-Höchstwertes und eines dritten MSE-Mittelwertes gemäß dem dritten Fehlervektor und
das Bestimmungsmodul (12) ferner zu Folgendem ausgelegt ist:

Bestimmen gemäß dem zweiten MSE-Höchstwert und dem zweiten MSE-Mittelwert, ob der Entzerrer den Monomode-Gleichgewichtskonvergenzzustand verlässt, und
Bestimmen gemäß dem dritten MSE-Höchstwert und dem dritten MSE-Mittelwert, ob der Entzerrer den Monomode-Gleichgewichtskonvergenzzustand eintritt.

9. Vorrichtung nach Anspruch 8, wobei
das Bestimmungsmodul (12) ferner zu Folgendem ausgelegt ist:

Bestimmen gemäß dem zweiten MSE-Höchstwert und dem zweiten MSE-Mittelwert, ob der Entzerrer in einen Multimode-Gleichgewichtskonvergenzzustand eintritt,
Bestimmen gemäß einem vierten MSE-Höchstwert und einem vierten MSE-Mittelwert, ob der Entzerrer den Multimode-Gleichgewichtskonvergenzzustand verlässt, und
Bestimmen gemäß einem fünften MSE-Höchstwert und einem fünften MSE-Mittelwert, ob der Entzerrer in den Monomode-Gleichgewichtskonvergenzzustand eintritt;
das Auslegungsmodul (12) ferner zu Folgendem ausgelegt ist:

Auslegen einer zweiten Fehlervektorparametergruppe in Reaktion auf das Bestimmen, dass der Entzerrer in den Multimode-Gleichgewichtskonvergenzzustand eintritt und dass eine voreingestellte Dauer abläuft, und
Auslegen der ersten Fehlervektorparametergruppe in Reaktion auf das Bestimmen, dass der Entzerrer den Multimode-Gleichgewichtskonvergenzzustand verlässt; und
das Berechnungsmodul (11) ferner zu Folgendem ausgelegt ist:

Berechnen eines vierten Fehlervektors gemäß der zweiten Fehlervektorparametergruppe,
Berechnen des vierten MSE-Höchstwertes und des vierten MSE-Mittelwertes gemäß dem vierten Fehlervektor,
Berechnen eines fünften Fehlervektors gemäß der ersten Fehlervektorparametergruppe und
Berechnen des fünften MSE-Höchstwertes und des fünften MSE-Mittelwertes gemäß dem fünften Fehlervektor.

10. Vorrichtung nach Anspruch 9, wobei der erste Fehlervektor, der zweite Fehlervektor, der dritte Fehlervektor, der vierte Fehlervektor und der fünfte Fehlervektor jeweils einen Fehlervektor in einem X-polarisierten Zustand und einen Fehlervektor in einem Y-polarisierten Zustand umfassen,
der erste MSE-Höchstwert, der zweite MSE-Höchstwert, der dritte MSE-Höchstwert, der vierte MSE-Höchstwert und der fünfte MSE-Höchstwert umfassen jeweils einen MSE-Höchstwert in einem X-polarisierten Zustand und einen MSE-Höchstwert in einem Y-polarisierten Zustand und
der erste MSE-Mittelwert, der zweite MSE-Mittelwert, der dritte MSE-Mittelwert, der vierte MSE-Mittelwert und der fünfte MSE-Mittelwert umfassen jeweils einen MSE-Mittelwert in einem X-polarisierten Zustand und einen MSE-Mittelwert in einem Y-polarisierten Zustand.

11. Vorrichtung nach Anspruch 10, wobei das Bestimmungsmodul (12) zu Folgendem ausgelegt ist:

Bestimmen, ob ein erster MSE-Höchstwert in einem X-polarisierten Zustand und ein erster MSE-Höchstwert in einem Y-polarisierten Zustand beide kleiner sind als ein Schwellwert 1, ob ein erster MSE-Mittelwert in einem X-polarisierten Zustand und ein erster MSE-Mittelwert in einem Y-polarisierten Zustand beide kleiner sind als ein Schwellwert 2 und ob ein 4S-Test bestanden ist;
Bestimmen, ob ein zweiter MSE-Höchstwert in einem X-polarisierten Zustand und ein zweiter MSE-Höchstwert in einem Y-polarisierten Zustand beide größer sind als ein Schwellwert 3, ob ein zweiter MSE-Mittelwert in einem X-polarisierten Zustand und ein zweiter MSE-Mittelwert in einem Y-polarisierten Zustand beide größer sind als ein Schwellwert 4 und ob der 4S-Test bestanden ist;
Bestimmen, ob der zweite MSE-Höchstwert in einem X-polarisierten Zustand und der zweite MSE-Höchstwert in einem Y-polarisierten Zustand beide kleiner sind als ein Schwellwert 5, ob der zweite MSE-Mittelwert in einem X-polarisierten Zustand und der zweite MSE-Mittelwert in einem Y-polarisierten Zustand beide kleiner sind als ein Schwellwert 6 und ob der 4S-Test bestanden ist; und
Bestimmen, ob ein vierter MSE-Höchstwert in einem X-polarisierten Zustand und ein vierter MSE-Höchstwert in einem Y-polarisierten Zustand beide größer sind als ein Schwellwert 7, ob ein vierter MSE-Mittelwert in einem X-polarisierten Zustand und ein vierter MSE-Mittelwert in einem Y-polarisierten Zustand beide größer sind als ein Schwellwert 8 und ob der 4S-Test bestanden ist.

**12.** Vorrichtung nach Anspruch 11, wobei der Schwellwert 1, der Schwellwert 2, der Schwellwert 3, der Schwellwert 4, der Schwellwert 5, der Schwellwert 6, der Schwellwert 7 und der Schwellwert 8 durch ein Kanalsimulationsexperiment erhalten werden und der Schwellwert 5 < der Schwellwert 7 < der Schwellwert 1 < der Schwellwert 3 und der Schwellwert 6 < der Schwellwert 8 < der Schwellwert 2 < der Schwellwert 4.

**13.** Computerspeichermedium, **dadurch gekennzeichnet, dass** das Computerspeichermedium dazu ausgelegt ist, computerausführbare Anweisungen zum Ausführen des Verfahrens zum Berechnen eines Blindentzerrungsfehlers nach einem der Ansprüche 1 bis 6 zu speichern.

**Revendications**

**1.** Procédé pour calculer une erreur d'égalisation aveugle, **caractérisé en ce qu'**il comprend :

la configuration (101) d'un premier groupe de paramètres de vecteur d'erreur ;
le calcul (102) d'un premier vecteur d'erreur selon le premier groupe de paramètres de vecteur d'erreur ;
le calcul (103) d'une première valeur maximum d'erreur quadratique moyenne, MSE, et d'une première valeur moyenne d'erreur quadratique moyenne selon le premier vecteur d'erreur ;
la détermination (104) du fait qu'un égaliseur passe dans un état de convergence stable monomode selon la première valeur maximum d'erreur quadratique moyenne et la première valeur moyenne d'erreur quadratique moyenne ; et
en réponse à la détermination du fait que l'égaliseur passe à l'état de convergence stable monomode, le calcul (105) d'un second vecteur d'erreur selon le premier groupe de paramètres de vecteur d'erreur.

**2.** Procédé selon la revendication 1, dans lequel, après le calcul (105) du second vecteur d'erreur selon le premier groupe de paramètres de vecteur d'erreur, le procédé comprend en outre :

le calcul (106) d'une seconde valeur maximum d'erreur quadratique moyenne et d'une seconde valeur moyenne d'erreur quadratique moyenne selon le second vecteur d'erreur ;
la détermination (107a) du fait que l'égaliseur quitte l'état de convergence stable monomode selon la seconde valeur maximum d'erreur quadratique moyenne et la seconde valeur moyenne d'erreur quadratique moyenne ;
en réponse à la détermination du fait que l'égaliseur quitte l'état de convergence stable monomode, le calcul (108a) d'un troisième vecteur d'erreur selon le premier groupe de paramètres de vecteur d'erreur ;
le calcul (109a) d'une troisième valeur maximum d'erreur quadratique moyenne et d'une troisième valeur moyenne d'erreur quadratique moyenne selon le troisième vecteur d'erreur ; et
la détermination (110a) du fait que l'égaliseur passe à l'état de convergence stable monomode selon la troisième valeur maximum d'erreur quadratique moyenne et la troisième valeur moyenne d'erreur quadratique moyenne.

**3.** Procédé selon la revendication 2, dans lequel, après le calcul (106) de la seconde valeur maximum d'erreur quadratique moyenne et de la seconde valeur moyenne d'erreur quadratique moyenne selon le second vecteur d'erreur, le procédé comprend en outre :

la détermination (107b) du fait que l'égaliseur passe à un état de convergence stable multimode selon la seconde valeur maximum d'erreur quadratique moyenne et la seconde valeur moyenne d'erreur quadratique moyenne ;
en réponse à la détermination du fait que l'égaliseur passe à l'état de convergence stable multimode et qu'une durée prédéfinie ait expiré, la configuration (108b) d'un second groupe de paramètres de vecteur d'erreur ;
le calcul (109b) d'un quatrième vecteur d'erreur selon le second groupe de paramètres de vecteur d'erreur ;
le calcul (110b) d'une quatrième valeur maximum d'erreur quadratique moyenne et d'une quatrième valeur moyenne d'erreur quadratique moyenne selon le quatrième vecteur d'erreur ;
la détermination (111b) du fait que l'égaliseur quitte l'état de convergence stable multimode selon la quatrième valeur maximum d'erreur quadratique moyenne et la quatrième valeur moyenne d'erreur quadratique moyenne ;
en réponse à la détermination du fait que l'égaliseur quitte l'état de convergence stable multimode, la configuration (112b) du premier groupe de paramètres de vecteur d'erreur ;
le calcul (113b) d'un cinquième vecteur d'erreur selon le premier groupe de paramètres de vecteur d'erreur ;
le calcul (114b) d'une cinquième valeur maximum d'erreur quadratique moyenne et d'une cinquième valeur moyenne d'erreur quadratique moyenne selon le cinquième vecteur d'erreur ; et
la détermination (115b) du fait que l'égaliseur passe à l'état de convergence stable monomode selon la cinquième valeur maximum d'erreur quadratique moyenne et la cinquième valeur moyenne d'erreur quadratique moyenne.

**4.** Procédé selon la revendication 3, dans lequel le premier vecteur d'erreur, le second vecteur d'erreur, le troisième vecteur d'erreur, le quatrième vecteur d'erreur et le cinquième vecteur d'erreur comprennent chacun un vecteur d'erreur dans un état de polarisation X et un vecteur d'erreur dans un état de polarisation Y,

dans lequel la première valeur maximum d'erreur quadratique moyenne, la seconde valeur maximum d'erreur quadratique moyenne, la troisième valeur maximum d'erreur quadratique moyenne, la quatrième valeur maximum d'erreur quadratique moyenne et la cinquième valeur maximum d'erreur quadratique moyenne comprennent chacune une valeur maximum d'erreur quadratique moyenne dans un état de polarisation X et une valeur maximum d'erreur quadratique moyenne dans un état de polarisation Y,

et

la première valeur moyenne d'erreur quadratique moyenne, la seconde valeur moyenne d'erreur quadratique moyenne, la troisième valeur moyenne d'erreur quadratique moyenne, la quatrième valeur moyenne d'erreur quadratique moyenne et la cinquième valeur moyenne d'erreur quadratique moyenne comprennent chacune une valeur moyenne d'erreur quadratique moyenne dans un état de polarisation X et une valeur moyenne d'erreur quadratique moyenne dans un état de polarisation Y.

**5.** Procédé selon la revendication 4, dans lequel la détermination du fait qu'un égaliseur passe dans un état de convergence stable monomode selon la première valeur maximum d'erreur quadratique moyenne et la première valeur moyenne d'erreur quadratique moyenne comprend :

en réponse à la détermination du fait qu'une première valeur maximum d'erreur quadratique moyenne dans un état de polarisation X et qu'une première valeur maximum d'erreur quadratique moyenne dans un état de polarisation Y soient inférieures à un seuil 1, qu'une première valeur moyenne d'erreur quadratique moyenne dans un état de polarisation X et qu'une première valeur moyenne d'erreur quadratique moyenne dans un état de polarisation Y soient inférieures à un seuil 2, et qu'un test 4S ait réussi, le fait que l'égaliseur passe à l'état de convergence stable monomode ; sinon, le fait que l'égaliseur ne passe pas à l'état de convergence stable monomode ;

dans lequel la détermination du fait que l'égaliseur quitte le mode de convergence stable monomode selon la seconde valeur maximum d'erreur quadratique moyenne et la seconde valeur moyenne d'erreur quadratique moyenne comprend :

en réponse à la détermination du fait qu'une seconde valeur maximum d'erreur quadratique moyenne dans un état de polarisation X et qu'une seconde valeur maximum d'erreur quadratique moyenne dans un état de polarisation Y soient supérieures à un seuil 3, qu'une seconde valeur moyenne d'erreur quadratique moyenne dans un état de polarisation X et qu'une seconde valeur moyenne d'erreur quadratique moyenne dans un état de polarisation Y soient supérieures à un seuil 4, et que le test 4S ait réussi, le fait que l'égaliseur quitte l'état de convergence stable monomode ; sinon, le fait que l'égaliseur reste dans l'état de convergence stable monomode ;

dans lequel la détermination du fait que l'égaliseur passe dans un état de convergence stable multimode selon la seconde valeur maximum d'erreur quadratique moyenne et la seconde valeur moyenne d'erreur quadratique moyenne comprend :

en réponse à la détermination du fait que la seconde valeur maximum d'erreur quadratique moyenne dans un état de polarisation X et que la seconde valeur maximum d'erreur quadratique moyenne dans un état de polarisation Y soient inférieures à un seuil 5, que la seconde valeur moyenne d'erreur quadratique moyenne dans un état de polarisation X et la seconde valeur moyenne d'erreur quadratique moyenne dans un état de polarisation Y soient inférieures à un seuil 6, et que le test 4S ait réussi, le fait que l'égaliseur passe à l'état de convergence stable multimode ; sinon, le fait que l'égaliseur reste dans l'état de convergence stable monomode ; et

dans lequel la détermination du fait que l'égaliseur quitte l'état de convergence stable multimode selon la quatrième valeur maximum d'erreur quadratique moyenne et la quatrième valeur moyenne d'erreur quadratique moyenne comprend :

en réponse à la détermination du fait qu'une quatrième valeur maximum d'erreur quadratique moyenne dans un état de polarisation X et qu'une quatrième valeur maximum d'erreur quadratique moyenne dans un état de polarisation Y soient supérieures à un seuil 7, et qu'une quatrième valeur moyenne d'erreur quadratique moyenne dans un état de polarisation X et qu'une quatrième valeur moyenne d'erreur quadratique moyenne dans un état de polarisation Y soient supérieures à un seuil 8, et que le test 4S ait réussi, le fait que l'égaliseur quitte l'état de convergence stable multimode ; sinon, le fait que l'égaliseur reste dans l'état de convergence stable multimode.

6. Procédé selon la revendication 5, dans lequel le seuil 1, le seuil 2, le seuil 3, le seuil 4, le seuil 5, le seuil 6, le seuil 7 et le seuil 8 sont obtenus à l'aide d'une expérience de simulation de canaux, et le seuil 5 < au seuil 7 < au seuil 1 < au seuil 3, et le seuil 6 < au seuil 8 < au seuil 2 < au seuil 4.

7. Appareil pour calculer une erreur d'égalisation aveugle, **caractérisé en ce qu'**il comprend :

   un module de configuration (10), qui est configuré pour configurer un premier groupe de paramètres de vecteur d'erreur ;
   un module de calcul (11), qui est configuré pour :

   calculer un premier vecteur d'erreur selon le premier groupe de paramètres de vecteur d'erreur,
   calculer une première valeur maximum d'erreur quadratique moyenne, MSE, et une première valeur moyenne d'erreur quadratique moyenne selon le premier vecteur d'erreur, et
   calculer un second vecteur d'erreur selon le premier groupe de paramètres de vecteur d'erreur en réponse à la détermination du fait qu'un égaliseur passe dans un état de convergence stable monomode ; et

   un module de détermination (12), qui est configuré pour déterminer si l'égaliseur passe à l'état de convergence stable monomode selon la première valeur maximum d'erreur quadratique moyenne et la première valeur moyenne d'erreur quadratique moyenne.

8. Appareil selon la revendication 7, dans lequel le module de calcul (10) est en outre configuré pour :

   calculer une seconde valeur maximum d'erreur quadratique moyenne et une seconde valeur moyenne d'erreur quadratique moyenne selon le second vecteur d'erreur,
   calculer un troisième vecteur d'erreur selon le premier groupe de paramètres de vecteur d'erreur en réponse à la détermination du fait que l'égaliseur quitte l'état de convergence stable monomode, et
   calculer une troisième valeur maximum d'erreur quadratique moyenne et une troisième valeur moyenne d'erreur quadratique moyenne selon le troisième vecteur d'erreur ; et

   le module de détermination (12) est en outre configuré pour :

   déterminer si l'égaliseur quitte l'état de convergence stable monomode selon la seconde valeur maximum d'erreur quadratique moyenne et la seconde valeur moyenne d'erreur quadratique moyenne, et
   déterminer si l'égaliseur passe à l'état de convergence stable monomode selon la troisième valeur maximum d'erreur quadratique moyenne et la troisième valeur moyenne d'erreur quadratique moyenne.

9. Appareil selon la revendication 8, dans lequel le module de détermination (12) est en outre configuré pour :

   déterminer si l'égaliseur passe dans un état de convergence stable multimode selon la seconde valeur maximum d'erreur quadratique moyenne et la seconde valeur moyenne d'erreur quadratique moyenne,
   déterminer si l'égaliseur quitte l'état de convergence stable multimode selon une quatrième valeur maximum d'erreur quadratique moyenne et une quatrième valeur moyenne d'erreur quadratique moyenne, et
   déterminer si l'égaliseur passe à l'état de convergence stable monomode selon une cinquième valeur maximum d'erreur quadratique moyenne et une cinquième valeur moyenne d'erreur quadratique moyenne ;

   le module de configuration (12) est en outre configuré pour :

   configurer un second groupe de paramètres de vecteur d'erreur en réponse à la détermination du fait que l'égaliseur passe à l'état de convergence stable multimode et qu'une durée prédéfinie ait expiré, et
   configurer le premier groupe de paramètres de vecteur d'erreur en réponse à la détermination du fait que l'égaliseur quitte l'état de convergence stable multimode ; et
   le module de calcul (11) est en outre configuré pour :

calculer un quatrième vecteur d'erreur selon le second groupe de paramètres de vecteur d'erreur,

calculer la quatrième valeur maximum d'erreur quadratique moyenne et la quatrième valeur moyenne d'erreur quadratique moyenne selon le quatrième vecteur d'erreur,

calculer un cinquième vecteur d'erreur selon le premier groupe de paramètres de vecteur d'erreur, et

calculer la cinquième valeur maximum d'erreur quadratique moyenne et la cinquième valeur moyenne d'erreur quadratique moyenne selon le cinquième vecteur d'erreur.

**10.** Appareil selon la revendication 9, dans lequel le premier vecteur d'erreur, le second vecteur d'erreur, le troisième vecteur d'erreur, le quatrième vecteur d'erreur et le cinquième vecteur d'erreur comprennent chacun un vecteur d'erreur dans un état de polarisation X et un vecteur d'erreur dans un état de polarisation Y,

la première valeur maximum d'erreur quadratique moyenne, la seconde valeur maximum d'erreur quadratique moyenne, la troisième valeur maximum d'erreur quadratique moyenne, la quatrième valeur maximum d'erreur quadratique moyenne et la cinquième valeur maximum d'erreur quadratique moyenne comprennent chacune une valeur maximum d'erreur quadratique moyenne dans un état de polarisation X et une valeur maximum d'erreur quadratique moyenne dans un état de polarisation Y,

et

la première valeur moyenne d'erreur quadratique moyenne, la seconde valeur moyenne d'erreur quadratique moyenne, la troisième valeur moyenne d'erreur quadratique moyenne, la quatrième valeur moyenne d'erreur quadratique moyenne et la cinquième valeur moyenne d'erreur quadratique moyenne comprennent chacune une valeur moyenne d'erreur quadratique moyenne dans un état de polarisation X et une valeur moyenne d'erreur quadratique moyenne dans un état de polarisation Y.

**11.** Appareil selon la revendication 10, dans lequel le module de détermination (12) est configuré pour :

déterminer si une première valeur maximum d'erreur quadratique moyenne dans un état de polarisation X et une première valeur maximum d'erreur quadratique moyenne dans un état de polarisation Y sont inférieures à un seuil 1, si une première valeur moyenne d'erreur quadratique moyenne dans un état de polarisation X et une première valeur moyenne d'erreur quadratique moyenne dans un état de polarisation Y sont inférieures à un seuil 2, et si un test 4S a réussi ;

déterminer si une seconde valeur maximum d'erreur quadratique moyenne dans un état de polarisation X et une seconde valeur maximum d'erreur quadratique moyenne dans un état de polarisation Y sont supérieures à un seuil 3, si une seconde valeur moyenne d'erreur quadratique moyenne dans un état de polarisation X et une seconde valeur moyenne d'erreur quadratique moyenne dans un état de polarisation Y sont supérieures à un seuil 4, et si le test 4S a réussi ;

déterminer si la seconde valeur maximum d'erreur quadratique moyenne dans un état de polarisation X et la seconde valeur maximum d'erreur quadratique moyenne dans un état de polarisation Y sont inférieures à un seuil 5, si la seconde valeur moyenne d'erreur quadratique moyenne dans un état de polarisation X et la seconde valeur moyenne d'erreur quadratique moyenne dans un état de polarisation Y sont inférieures à un seuil 6, et si le test 4S a réussi ; et

déterminer si une quatrième valeur maximum d'erreur quadratique moyenne dans un état de polarisation X et une quatrième valeur maximum d'erreur quadratique moyenne dans un état de polarisation Y sont supérieures à un seuil 7, si une quatrième valeur moyenne d'erreur quadratique moyenne dans un état de polarisation X et une quatrième valeur moyenne d'erreur quadratique moyenne dans un état de polarisation Y sont supérieures à un seuil 8, et si le test 4S a réussi.

**12.** Appareil selon la revendication 11, dans lequel le seuil 1, le seuil 2, le seuil 3, le seuil 4, le seuil 5, le seuil 6, le seuil 7 et le seuil 8 sont obtenus à l'aide d'une expérience de simulation de canaux, et le seuil 5 < au seuil 7 < au seuil 1 < au seuil 3, et le seuil 6 < au seuil 8 < au seuil 2 < au seuil 4.

**13.** Support de stockage informatique, **caractérisé en ce que** le support de stockage informatique est configuré pour stocker des instructions exécutables par un ordinateur destinées à exécuter le procédé pour calculer une erreur d'égalisation aveugle selon l'une quelconque des revendications 1 à 6.

100G line card

100G optical
module

100G DSP

JTAG | Public module

Mux

DAC | DQPSK
encoder

SD-EFEC
encoder and
decoder

OTU4
alarm and
performance
monitoring

System port

OTU4.34
port

ADC | DSP

**FIG. 1**

X ——————— Hxx ——⊕—— X'

Hxy

Hyx ——⊕—— Y'

Y ——————— Hyy

**FIG. 2**

Configure a first error vector parameter group — 101

Calculate a first error vector according to the first error vector parameter group — 102

Calculate a first MSE maximum value and a first MSE mean value according to the first error vector — 103

Determine whether an equalizer enters a single-mode steady-state converging state according to the first MSE maximum value and the first MSE mean value — 104

Calculate a second error vector according to the first error vector parameter group if the equalizer enters the single-mode steady-state converging state — 105

Calculate a second MSE maximum value and a second MSE mean value according to the second error vector — 106

Determine whether the equalizer exits the single-mode steady-state converging state according to the second MSE maximum value and the second MSE mean value — 107a

Calculate a third error vector according to the first error vector parameter group if the equalizer exits the single-mode steady-state converging state — 108a

Calculate a third MSE maximum value and a third MSE mean value according to the third error vector — 109a

Determine whether the equalizer enters the single-mode steady-state converging state according to the third MSE maximum value and the third MSE mean value — 110a

# FIG. 3

Determine whether the equalizer enters a multi-mode steady-state converging state according to the second MSE maximum value and the second MSE mean value — 107b

Configure a second error vector parameter group if the equalizer enters the multi-mode steady-state converging state and that a preset duration expires — 108b

Calculate a fourth error vector according to the second error vector parameter group — 109b

Calculate a fourth MSE maximum value and a fourth MSE mean value according to the fourth error vector — 110b

Determine whether the equalizer exits the multi-mode steady-state converging state according to the fourth MSE maximum value and the fourth MSE mean value — 111b

Configure the first error vector parameter group if the equalizer exits the multi-mode steady-state converging state — 112b

Calculate a fifth error vector according to the first error vector parameter group — 113b

Calculate a fifth MSE maximum value and a fifth MSE mean value according to the fifth error vector — 114b

Determine whether the equalizer enters the single-mode steady-state converging state according to the fifth MSE maximum value and the fifth MSE mean value — 115b

# FIG. 4

Output ← SET ← | Shift buffer area | Input

SET
| 1 | 2 | 3 | 4 |

4S

## FIG. 5

**FIG. 6**

10

11

12

| Configuration module | Calculation module | Determination module |

**FIG. 7**

**REFERENCES CITED IN THE DESCRIPTION**

**Patent documents cited in the description**

- CN 201610737740

- CN 10184317 A